(19) Europäisches Patentamt
European Patent Office
Office européen des brevets

(11) Publication number: **0 257 698 B1**

(12) **EUROPEAN PATENT SPECIFICATION**

(45) Date of publication of patent specification: **10.07.91**  (51) Int. Cl.⁵: **F16L 58/10, B05D 3/12**

(21) Application number: **87201540.9**

(22) Date of filing: **13.08.87**

(54) **A tortoise-shell-like lining for anticorrosive and antielectrostatic purposes.**

(30) Priority: **15.08.86 CN 86105130**

(43) Date of publication of application:
**02.03.88 Bulletin 88/09**

(45) Publication of the grant of the patent:
**10.07.91 Bulletin 91/28**

(84) Designated Contracting States:
**FR GB IT**

(56) References cited:
**DE-A- 3 044 872**
**FR-A- 1 459 324**

(73) Proprietor: **Chen, Shijie**
**Room 501, No.32 Building Lotus Mountain Jida**
**Zhuhai Guangdong Province(CN)**

(72) Inventor: **Chen, Shijie**
**Room 501, No.32 Building Lotus Mountain Jida**
**Zhuhai Guangdong Province(CN)**

(74) Representative: **Roggero, Sergio et al**
**Ing. Barzanò & Zanardo Milano S.p.A. Via Borgonuovo 10**
**I-20121 Milano(IT)**

## Description

Background of the Invention

This invention relates to an anticorrosive and antielectrostatic technique. More particularly, this invention relates to a metallic reactor with an anticorrosive and antielectrostatic metal-reinforced resinous lining and the process of making thereof.

The so-called "metallic vessel" throughout this specification is referred to those equipments such as tank, tower and pipe, etc.

Metallic vessels are rapidly damaged owing to corrosion when in contact with certain corrosive media, such as acid, alkali or salt. In order to decrease the corrosive rate and lengthen the life of the equipment, a lining made of different anticorrosive materials, such as lead, aluminium, glass-fibre-reinforced plastics, ceramics, rubber or plastics is generally employed in the prior art, and metal-coating, plating or plastics spraying may also be used for the same purpose.

US-A-3 341 136 relates to an anticorrosive material comprised of three different components, namely: a ferrous metal base, a zinc- or aluminium coating layered adhered to the ferrous metal base and a surface layer composed of the copolymer of an unsaturated olefin and an acid-radical-containing olefin adhered to the zinc- or the aluminium coating layer.

JP-A-59/62110 (A) teaches a method which comprises coating the outer surface of a steel pipe with anticorrosive materials, wrapping it with an anticorrosive belt and then enveloping it in a protecting shell made of a polyalkylene resin which is reinforced by glass fibre of 50 mm or more in length.

FR-A-1 459 324 discloses a process for anchoring thermosetting resins to the interior of a reinforced concrete tube by means of a metallic reinforcing grid which is welded to the longitudinal reinforcing bars of the concrete tube concerned and is then folded over the tube edge: the reinforcing grid can also be non-metallic.

Although the prior art aforementioned contributed to the solution of various corrosion problems somewhat, the costs are high, the procedures are intricate and the equipments become bulky and heavy.

In addition, the use of nonmetallic liners such as plastics or glass fibres are exposed to peeling off and low electric conductivity.

The invention, therefore, provides:
A metallic reactor vessel with an anticorrosive and antielectrostatic metal-reinforced resinous lining, wherein said metal-reinforced resinous lining consists of:

a) a plurality of metallic braces spot-welded to discrete points of the inner wall of said metallic reactor vessel, the opposite ends of said metallic braces being spot-welded to discrete points of a metallic screen and

b) a layer of a thermoplastic resin embedding both said metallic screen and said metallic braces, and protruding beyond said plastic-embedded metallic screen towards the interior of said reactor vessel.

The invention, consequently, also provides:
A process for preparing a metallic reactor vessel with an anticorrosive and antielectrostatic metal reinforced resinous lining as defined above, comprising the steps of:

a) spot-welding metallic braces to discrete points of the inner wall of said metallic reactor vessel;

b) spot-welding the opposite ends of said metallic braces to discrete points of said metallic screen, and

c) embedding said metallic screen and the metallic braces welded thereto in a thermoplastic resin mass.

The present invention can be suitably carried out by fixing metallic braces and a metallic tortoise-shell-like screen to the inner wall of the vessel as framework, and applying plastics as filling and coating materials. If it is necessary to protect the equipment from electrostatics, antielectrostatic reagent can be added to the plastics. The braces are fixed to the inner wall of the vessel, which may join with each other longitudinally or transvesely along the inner wall, and also can be arranged crosswise in both directions in the vessel. The tortoise-shell-like screen is fixed to the braces, which forms a restricting screen and an electrostatic discharge screen for anticorrosive and antielectrostatic purposes, and it also serves as the framework of lining. Then the plastics with or without antielectrostatic reagent is melted at 200-400°C and filled into the braces and tortoise-shell-like screen alrealy fixed to the inner wall of the vessel by means of rotary roll plastic forming method, so that the plastics, braces and tortoise-shell-like screen can mingle together and form a tortoise-shell-like lining for metallic vessels which is composed of:

(1) A framework consisting of metallic braces and metal wire screen or metal plate screen which are fixed to the metallic vessels;

(2) plastic coating substance which is filled into the framework,

(3) antielectrostatic reagent optionally added to the plastic coating substance.

Metal wires of 2-8mm in diameter can be used for the braces and the distance of the two braces adjacent to each other is 100-300mm. Metal screen fabricated with wires of 0.6-1.5mm in diameter or metal plate screen of 0.6-1.5mm in thickness can be used as the tortoise-shell-like screen. The hole size of the screen is in the range of 10×10-30×30mm. The plastics employed in this invention can be polyethylene, polycarbonate, ABS, polytetrafluoroethylene or the like. Polyethylene is preferred. Additives and filler materials may be added to modify the plastics. Plastics containing antielectrostatic reagent such as aluminium powder or acetylene black have good antielectrostic effects.

The present invention also provides an anticorrosive tortose-shell-like lining metallic vessel which includes:

(1) a metallic vessel;
(2) a framework consisting of metallic braces and metal wire screen or metal plate screen which are fixed to the metallic vessel,
(3) plastic coating substances, which is filled into the framework;
(4) antielectrostatic reagent added to the plastics in an amount of 10-30% based on the total weight of the coating material.

Metal wires of 2-8mm in diameter can be used for the braces, and the tortoise-shell-like screen can be fabricated with metal wires of 0.6-1.5mm in diameter or can be made of metal plate screen of 0.5-1.5mm in thickness. The hole size of the screen is 10×10-30×30mm. The plastic filler is preferably polyethylene with small amount of antielectrostatic reagent known in the art such as aluminium powder, acetylene black.

According to this invention, the connection and fixing of the metallic braces, wires screen or plate screen onto the metal base (metallic vessel) can be realized in various manners such as welding, sticking or typing which are known to those skilled in the art. Welding is preferred. The braces can be welded in spots and fixed longitudinally, transversely or crosswise along the inner wall of the vessel. The tortoise-shell-like screen is welded in spots onto the braces, thus a regular framework is formed on the inner wall of the vessel. The plastic and additives are heated and melted at 200-400°C and coated uniformly on the framework and inner wall of the vessel. After cooling and finalizing, a smooth, uniform and nice lining is formed on the inner wall of the vessel.

The lining made in accordance with this invention will not peel off as the braces and tortoise-shell-like screen are fixed to the vessel, and the deformation of the plastic, coating is little. As antielectrostatic reagent can be added to the Mastic filler, a discharge circuit is formed through the antielectrostatic reagent, braces and tortoise-shell-like screen. When electrostatic charge is generated in the installation, it could be discharged off through the ground wire.

In accordance with this invention lining can be made for metallic vessels of different shapes. If the vessel is to large in size or complex in shape, lining can be made separatedly by dividing the vessel into several parts, and finally connect the flange of individual part with it counterpart. As compared with other kinds of lining such as lead, aluminium, glass fibre reinforced plastics or ceramics, the lining in accordance with this invention is low in cost, lighter in weight, more firmly adhered to the metallic vessel. The service life of the equipment can be 2 to 3 times longer, and the cost of lining is reduced to less than one third. The vessel with the lining according to this invention can replace vessels made of stainless steel and its service life is five times that of the latter and its cost one tenth that of the latter.

Figure 1 is a sectional schematic drawing of the metallic vessel with the tortoise-shell-like lining;

Figure 2 is a schematic drawing of the structure of the tortoise-shell-like lining.

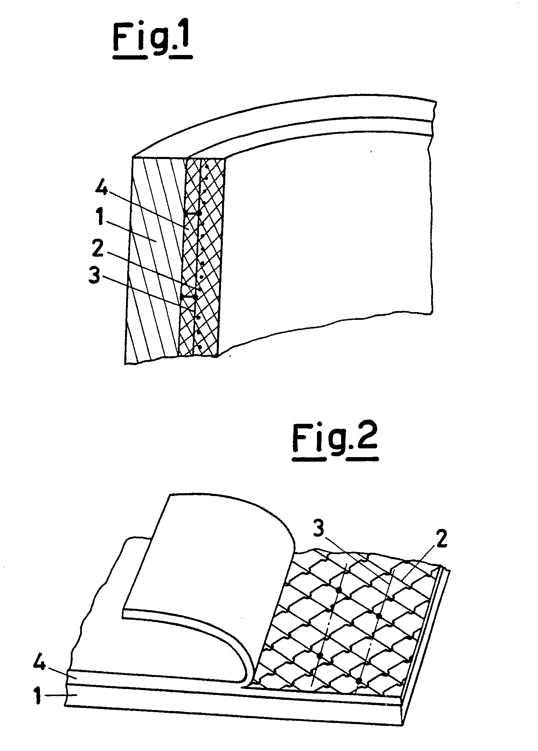

In figures 1 and 2, 1 represents the metallic vessel, 2 the tortoise-shell-like screen; 3 the metallic braces and 4 the plastic filler substance.

This invention will be further described in the following examples.

Example 1

The tortoise-shell-like lining according to the invention was used to line a tetrachlorination tower having 16m in height and 2.6m in diameter. As the tower was high, the lining was carried out in four parts. Iron braces of 4mm in diameter were first crosswise welded longitudinally and transversely in spots onto the inner wall of the tower. The size of the square space bounded by the braces was 200×200mm. Then the tortoise-shell-like screen fabricated with iron wires of 0.9mm in diameter and having hexagonal holes of 12mm in width was wedded in spots onto the braces. The plastics mixed with aluminium powder and containing polyethylene as the main constituent was poured into the tower parts, melted and coated on the braces and tortoise-shell-like screen in the inner wall of the tower parts by means of roll plastic forming method. After cooling an anticorrosive and antielectrostatic tortoise-shell-like lining was formed. Afterwards, the four parts were joined together by connecting the individual flange with its counterpart. The thickness of the lining was 15mm. Experimental results were as follows:

Specific gravity: 0.92-0.96
Tensile strength: 245,165 kPa (2.50 Kg/cm²)
Bending strength: 30400,460 kPa (310 K/cm²)
Impact strength: 5393,630 kPa (55 Kg/cm²)
Adhesion strength: 49033,000 kPa (500 Kg/cm²)
Temperature for application 65-120°C

surface resistance: $3 \times 10^7$-$3 \times 10^{10}$ Ω

The cost of lining according to this method was one fifth of the cost of lining with glass fibre reinforced plastics, or one seventh of the cost of lining with ceramics, while the service life was 2 to 3 times longer.

Results obtained by the following examples were also similar to that in above Example 1.

Example 2

Lining for a tetrachlorination tower having 10m in height and 2.5m in diameter was conducted in the same manner as in Example 1, except that the diameter of the braces employed was 6mm, the diameter of the metal wires used for fabricating the tortoise-shell-like screen was 1.5mm, and the size of the square screen holes was 29×29 mm. After the roll plastic forming step the thickness of the lining was 8mm.

Example 3

Lining for a tetrachlorination tower having 8m in height and 2.3m in diameter was carried out in the same manner as in Example 1, except that the diameter of the braces employed was 2mm, the diameter of the metal wires used for fabricating the tortoise-shell-like screen was 0.5mm and the size of the screen holes is 10×10mm. After forming of the lining, its thickness is 3mm.

Claims

1. A metallic reactor vessel with an anticorrosive and antielectrostatic metal-reinforced resinous lining, wherein said metal-reinforced resinous lining consists of:
    a) a plurality of metallic braces (3) spot-welded to discrete points of the inner wall (1) of said metallic reactor vessel, the opposite ends of said metallic braces being spot-welded to discrete points of a metallic screen (2), and
    b) a layer (4) of a thermoplastic resin embedding both said metallic screen (2) and said metallic braces (3), and protruding beyond said plastic-embedded metallic screen towards the interior of said reactor vessel.

2. Metallic reactor vessel according to claim 1, wherein said metallic screen consists of a wire screen.

3. Metallic reactor vessel according to claim 1, wherein said metallic screen consists of a metal plate screen.

4. Metallic reactor vessel according to claim 1, wherein said thermoplastic resin is polyethylene.

5. Metallic reactor vessel according to claim 1, wherein said thermoplastic resin is a resin selected from polycarbonate, ABS, and polytetrafluoroethylene.

6. Metallic reactor vessel according to claim 1, wherein said thermoplastic resin contains an antielectrostatic agent.

7. Process for preparing a metallic reactor vessel with an anticorrosive and antielectrostatic metal reinforced resinous lining according to claim 1, comprising the steps of:
    a) spot-welding metallic braces to discrete points of the inner wall of said metallic reactor vessel;
    b) spot-welding the opposite ends of said metallic braces to discrete points of said metallic screen, and
    c) embedding said metallic screen and the metallic braces welded thereto in a thermoplastic resin mass.

Revendications

1. Cuve de réacteur métallique avec un revêtement résineux renforcé par un métal, anticorrosif et antiélectrostatique, dans laquelle ledit revêtement résineux renforcé par un métal se compose de :
    a) une pluralité de membrures métalliques (3) soudées par points en des points individuels de la paroi intérieure (1) de ladite cuve de réacteur métallique, les extrémités opposées desdites membrures métalliques étant soudées par points en des points individuels d'un écran métallique (2), et
    b) une couche (4) d'une résine thermoplastique incluant tout à la fois l'écran métallique (2) et lesdites membrures métalliques (3) et faisant saillie au-delà dudit écran métallique inclu dans un plastique en direction de l'intérieur de ladite cuve de réacteur.

2. Cuve de réacteur métallique selon la revendication 1, dans laquelle ledit écran métallique se compose d'un écran en fil métallique.

3. Cuve de réacteur métallique selon la revendication 1, dans laquelle ledit écran métallique se compose d'un écran en plaque de métal.

4. Cuve de réacteur métallique selon la revendication 1, dans laquelle ladite résine thermoplastique est du polyéthylène.

5. Cuve de réacteur métallique selon la revendication 1, dans laquelle ladite résine thermoplastique est une résine choisie parmi le polycarbone, l'ABS et le poly(tétrafluoroéthylène).

6. Cuve de réacteur métallique selon la revendication 1, dans laquelle ladite résine thermoplastique contient un agent antiélectrostatique.

7. Procédé pour réparer une cuve de réacteur métallique avec un revêtement résineux renforcé par un métal, anticorrosif et antiélectrostatique, selon la revendication 1, comportant les étapes suivantes :
   a) soudure par points de membrures métalliques en des points individuels de la paroi intérieure de ladite cuve de réacteur métallique;
   b) soudure par points des extrémités opposées desdites membrures métalliques en des points individuels dudit écran métallique,
   c) inclusion dudit écran métallique et des membrures métalliques soudées à celui-ci dans une masse de résine thermoplastique.

**Ansprüche**

1. Metallisches Reaktionsgefäß mit einer korrosionsverhindernden und anti-elektrostatischen metallverstärkten Harzauskleidung, worin diese metallverstärkte Harzauskleidung aus:
   a) einer Mehrzahl von Metallklammern (3), die an diskrete Punkte der Innenwand (1) des metallischen Reaktionsgefäßes punktgeschweißt sind und deren gegenüberliegende Enden an diskrete Punkte eines Metallsiebes (2) punktgeschweißt sind, und
   b) einer Schicht (4) eines thermoplastischen Harzes, das sowohl das metallische Sieb (2) als auch die Metallklammern (3) einbettet und sich über das in Kunststoff eingebettete Metallsieb hinaus in das Innere des Reaktionsgefäßes erstreckt,
   besteht.

2. Metallisches Reaktionsgefäß nach Anspruch 1, worin das metallische Sieb aus einem Drahtsieb besteht.

3. Metallisches Reaktionsgefäß nach Anspruch 1, worin das metallische Sieb aus einem Metallblechsieb besteht.

4. Metallisches Reaktionsgefäß nach Anspruch 1, worin das thermoplastische Harz Polyethylen ist.

5. Metallisches Reaktionsgefäß nach Anspruch 1, worin das thermoplastische Harz ein unter Polycarbonat, ABS und Polytetrafluorethylen ausgewähltes Harz ist.

6. Metallisches Reaktionsgefäß nach Anspruch 1, worin das thermoplastische Harz ein anti-elektrostatisches Mittel enthält.

7. Verfahren zur Herstellung eines metallischen Reaktionsgefäßes mit einer korrosionsverhindernden und anti-elektrostatischen metallverstärkten Harz-auskleidung nach Anspruch 1, umfassend die folgenden Stufen:
   a) Punktschweißen von Metallklammern an diskrete Punkte der Innenwand des metallischen Reaktionsgefäßes;
   b) Punktschweißen der gegenüberliegenden Enden der Metallklammern an diskrete Punkte des Metallsiebes, und
   c) Einbetten des Metallsiebes und der daran angeschweißten Metallklammern in eine thermoplastische Harzmasse.

# Fig.1

# Fig.2